# EUROPÄISCHE PATENTSCHRIFT

(11) **EP 1 346 967 B1**
(45) Veröffentlichungstag und Bekanntmachung des Hinweises auf die Patenterteilung: **17.12.2008**
(21) Anmeldenummer: 03005511.5
(22) Anmeldetag: 11.03.2003
(51) Int. Cl.: C04B 35/56, C04B 35/573, F16D 69/02

(54) **Verfahren zur Infiltration von porösen Kohlenstoffverbundkörpern**
Method for infiltration of porous carbon composites
Procédé pour l'infiltration de composites poreux de carbone

(30) Priorität: 19.03.2002 DE 10212043
(43) Veröffentlichungstag der Anmeldung: 24.09.2003
(73) Patentinhaber: AUDI AG, 85045 Ingolstadt (DE)
(72) Erfinder: Rosenlöcher, Jens, 86153 Augsburg (DE)
(74) Vertreter: Deckers, Hellmuth Alexander

(56) Entgegenhaltungen:
- DE-A- 4 035 746
- DE-A- 19 710 105
- US-A- 4 120 731
- US-A- 5 571 758
- US-A- 6 110 535

## Beschreibung

Die Erfindung betrifft ein Verfahren zur Infiltration von porösen Kohlenstoffverbundkörpern. Insbesondere betrifft sie ein Verfahren zur Herstellung von keramischen metallcarbidhaltigen Verbundwerkstoffen, insbesondere SiC-haltigen Verbundwerkstoffen und C/SiC-Verbundwerkstoffen (mit Kohlenstoffasern verstärkten und Siliciumcarbid in der Matrix enthaltenden Verbundwerkstoffen), mittels der Infiltration von geschmolzenen Metallen in kohlenstoffhaltige Vorkörper unter Verwendung von porösen Dochten, sowie die Verwendung von carbonisierten oder verkokten Holzwerkstoffen als Dochtmaterial zur Schmelzinfiltration.

Unter den keramischen metallcarbidhaltigen Verbundwerkstoffen haben jüngst insbesondere die kohlenstoffaserverstärkten SiC-Keramiken, zu denen die Werkstoffsysteme C-C/SiC (mit Kohlenstoffasern verstärkten und Siliciumcarbid und Kohlenstoff in der Matrix enthaltenden Verbundwerkstoffen) und C/SiC zu zählen sind, besondere technische Bedeutung erlangt.

Als bevorzugtes Verfahren zur Herstellung von faserverstärktem SiC, C-C/SiC- oder C/SiC-Verbundwerkstoffen hat sich das "Flüssigsilicierverfahren" oder "Liquid Silicon Infiltration" (LSI) für zahlreiche Anwendungen, wie Brems- und Kupplungsscheiben, Satellitenspiegel und Brennkammerauskleidungen als besonders vorteilhaft herausgestellt.

Das LSI-Verfahren umfaßt dabei die folgenden wesentlichen Schritte:
a) Herstellen eines CFK-Vorkörpers (englisch als "CFRP" = "Carbon Fibre Reinforced Polymer" bezeichnet)
b) Carbonisierung des Vorkörpers zu einem porösen kohlenstoffhaltigen Grünkörper, typischerweise einem C/C-Körper ("mit Kohlenstoffasern verstärkter Kohlenstoff")
c) Schmelzinfiltration des Grünkörpers mit einer Siliciumschmelze
d) Reaktion zumindest eines Teiles des Kohlenstoffs des Grünkörpers mit dem Silicium zu SiC, wobei eine kohlenstoffaserverstärkte Verbundkeramik mit einer SiC, Si, und C enthaltenden Matrix entsteht.

Ein derartiges Verfahren ist beispielsweise bekannt aus der DE-A 197 10 105.

In analoger Weise ist es möglich, Verbundwerkstoffe mit Matrices aus anderen Metallcarbiden durch eine Schmelzinfiltration mit den betreffenden metallcarbidbildenden Metallen herzustellen. Dabei sind neben den Halbmetallen Silicium und Bor auch die Metalle Eisen, Nickel, Titan, Zirkon, Vanadium, Chrom, Molybdän und Wolfram sowie beliebige Legierungen dieser Metalle und Halbmetalle von Bedeutung. Im folgenden werden der Einfachheit halber auch die genannten Halbmetalle als Metalle bezeichnet.

Das technisch einfachste Verfahren, die Metallschmelze zuzuführen, ist die Überschichtung des porösen Grünkörpers mit einer Schüttung aus Metallpulver, insbesondere Siliciumpulver, welches beim Heizen über dessen Schmelzpunkt flüssig wird und in die Poren des Grünkörpers durch die Kapillarwirkung aufgenommen wird. Dieses einfache Verfahren hat aber den gravierenden Nachteil, daß die teils sehr dünnflüssige Schmelze ungehindert vom Grünkörper herunter- und wegfließen fließen kann, ohne daß eine Infiltration stattfindet, also ein Eindringen der Schmelze in die Hohlräume im Inneren des Grünkörpers. Die Metallaufnahme läßt sich daher nur schwer steuern. Insbesondere muß durch besondere Maßnahmen verhindert werden, daß der mit Metall überzogene und/oder getränkte Körper mit dem Tiegel oder dem Untergrund durch eine verbindende Metallschicht fest zusammengefügt (gelötet) wird.

Diese Probleme lassen sich vermeiden, wenn das Metall, insbesondere Silicium, als Formkörper gebunden vorliegt (sogenannter "Spendersilicium-Formkörper"), oder wenn wesentliche Anteile der Metallschmelze über poröse Unterlagen oder Dochtmaterialien zugeführt werden.

Unter "Dochten" werden hier solche porösen Körper verstanden, die Flüssigkeiten durch ihre Kapillarwirkung ansaugen und an einer anderen Stelle abgeben können. Durch die Entnahme an dieser anderen Stelle kann ein Transport der Flüssigkeit durch den Docht stattfinden.

So wird beispielsweise in der EP-A 0 995 730 ein Verfahren zur Herstellung silicierter Formkörper vorgeschlagen, bei dem Silicium-Pulver oder Silicium-Granulat unter Zusatz eines Bindemittels zu einem Formkörper geformt wird und der Grünkörper mit dem Silicium infiltriert wird, das bei entsprechender Temperatur aus dem Spendersilicium-Formkörper nach unten auf den Grünkörper fließt. Bei diesem Verfahren ist aber die Gefahr gegeben, daß die Reste des Spendersilicium-Formkörpers mit dem silicierten Verbundwerkstoffkörper versintern oder verkleben und nur durch aufwendige Oberflächennachbehandlung vollständig entfernt werden können.

Eine Variante, flüssiges Silicium über poröse Unterlagen und Dochte zuzuführen, wird in der DE-A 197 11 831 beschrieben. Anstatt den Formkörper unmittelbar in einen mit Bornitrid beschichteten Graphittiegel einzulegen, kann alternativ auch eine poröse SiC-Chargierplatte verwendet werden, die auf Füßen in der Schmelze des Silicium steht oder über poröse Dochte damit verbunden ist. Dabei kann auch eine größere Menge an Silicium-Granulat zur Erzeugung der Schmelze in den Tiegel eingegeben werden, da die Schmelze über die porösen Füße und die poröse Chargierplatte von unten in den Formkörper aufsteigt. Zwar kann auf diese Weise insbesondere durch die Verwendung poröser Dochte das Silicium effizient zugeführt werden, jedoch ist das Problem der Verklebung des Verbundwerkstoffkörpers mit der SiC-Chargierplatte noch nicht zufriedenstellend gelöst. Auch ist die Konstruktion aus Docht und Platte insgesamt material- und kostenintensiv und damit für die Massenproduktion inakzeptabel.

Gemäß DE-A- 4 035 746 wird als Docht zur Infiltration eines Grünkörpers, der Siliciumcarbid und Kohlenstoffpulver enthält, ein Kohlenstoffschaum mit einem Volumenanteil an offenen Poren von 86 % bis 90 % eingezetzt. Der Kohlenstoffschaum kann durch Carbonieseren von eingeschloss einem organischen Material erhalten werden.

Des weiteren ist bekannt, Kohlenstoffilze als Dochtmaterial in der Weise einzusetzen, daß die Grünkörper direkt auf die in einer Siliciumschmelze fußenden Dochte gestellt werden. Die Kohlenstoffilze müssen dabei hinreichende Festigkeit bei gleichzeit sehr hoher Porosität aufweisen. Derartige Filze sind besonders für die Massenfertigung unangemessen teuer.

Aufgabe der Erfindung ist daher die Bereitstellung eines Verfahrens zur kontrollierten Zuführung von Metallschmelzen an poröse kohlenstoffhaltige Grünkörper, sowie die Bereitstellung der hierzu benötigten Materialien, wobei die Prozeßkosten, insbesondere die Materialkosten, der Aufwand zur Beladung des Infiltrationsofens und für die Nachbearbeitung der infiltrierten Verbundwerkstoffkörper gegenüber dem Stand der Technik verringert werden sollen.

Die Aufgabe wird erfindungsgemäß dadurch gelöst, daß die Metallschmelze über Dochte aus porösem Kohlenstoffmaterial über geringe Kontaktflächen direkt in den Grünkörper zugeführt wird, wobei als Ausgangsmaterial für die Dochte Holzwerkstoffe eingesetzt werden.

Die Erfindung betrifft daher ein Verfahren zur Herstellung von metallcarbidhaltigen keramischen Verbundwerkstoffen umfassend die folgenden Schritte
- Herstellung eines porösen kohlenstoffhaltigen Grünkörpers
- Infiltration des Grünkörpers mit der Schmelze eines carbidbildenden Metalls
- Reaktion zumindest eines Teiles des Kohlenstoffs des Grünkörpers mit dem carbidbildenden Metall zu einem Metallcarbid,
**dadurch gekennzeichnet, daß** das carbidbildende Metall zumindest zum Teil über mindestens einen Docht aus porösem Kohlenstoffmaterial mit Porenkanälen zugeführt wird, wobei der Docht durch Verkoken oder Carbonisieren von Holz hergestellt wird, und die offene Porosität der Dochte mindestens 15 % und höchstens 60 % beträgt.

Das erfindungsgemäße Verfahren sieht dabei bevorzugt vor, daß die Grünkörper direkt auf Dochte aus porösem kohlenstoffhaltigem Material aufgelegt werden, wobei die Dochte mit ihrem unteren Ende in die Metallschmelze eintauchen. Die Schmelze, die die Dochte speist, wird typischerweise während des Heizens auf die Infiltrationstemperatur aus Pulver, Granulat oder Formkörpern aus dem betreffenden Metall gebildet, die sich üblicherweise lose in beschichteten oder ausgekleideten Graphittiegeln als Rezipienten der Schmelze befinden. Die Dochte werden dabei zumindest zum Teil von dem betreffenden Metall umgeben.

Dabei ist es nicht zwingend notwendig, daß die gesamte Metallschmelze über die Dochte zugeführt wird. Bevorzugt wird vielmehr ein sich nach Grünkörpergeometrie und -porosität richtender Anteil der Schmelze über eine Schüttung von Metallpulver oder -granulat oder Metallformkörper direkt auf oder an den Grünkörper zugeführt. Diese Kombination von Dochten und Schüttung erhöht die Infiltrationsgeschwindigkeit und deren Gleichmäßigkeit über den gesamten Grünkörper.

Entscheidend ist dabei nur, daß die aus der Schüttung gebildete Schmelze entweder auf der Oberfläche des Grünkörpers zurückgehalten wird oder nicht ungenutzt von ihm wegfließen kann. Dabei zeigt sich ein weiterer Vorteil der Dochte, denn vom Grünkörper abfließende Metallschmelze sammelt sich im Tiegel, wird von den Dochten wieder an den Grünkörper zurückgeführt und zur Infiltration genutzt. Somit läßt sich auch die Menge der zugeführten Schmelze in vorteilhafter Weise gut kontrollieren.

Das Holz hat den großen Vorteil gegenüber den bisher üblicherweise verwendeten Kohlenstoffilzen, sehr kostengünstig und nahezu uneingeschränkt verfügbar zu sein. Die besondere Eignung von Holz als Dochtmaterial ergibt sich aus dessen einzigartigen Aufbau. Holz ist ein natürlicher Verbundwerkstoff mit hochgeordnetem und regelmäßigem Mikrogefüge, der mit technischen Mitteln kaum herzustellen wäre. Für die Dochtfunktion sind dabei die dem Holz eigenen in Wuchsrichtung parallel verlaufenden Kanalporen ausschlaggebend (im folgenden auch Mesoporen genannt), welche im lebenden Holz den Wassertransport übernehmen. Durch diese werden durchgängige Porenkanäle gebildet. Holz ist indes aufgrund seines hohen Gehaltes an Wasser und flüchtigen organischen Bestandteilen nicht selbst als Dochtmaterial geeignet. Um zu den erfindungsgemäß bevorzugten Dochten aus carbonisiertem oder verkoktem Holz zu gelangen, wird Holz bei Temperaturen von 40 bis 95 °C getrocknet und bei Temperaturen von mindestens 650 °C, bevorzugt im Bereich von 700 °C bis 1500 °C carbonisiert. Ebenso ist es aber auch möglich, die bekannten Verkokungsverfahren zu benutzen. Das Holz verliert dabei einen wesentlichen Teil seiner Masse und schwindet, ohne daß die typische Mikrostruktur verlorengeht. Erfindungsgemäß werden solche Hölzer eingesetzt, die bei der Carbonisierung einen Massenverlust von mindestens 50 %, bevorzugt mindestens 60 % und besonders bevorzugt mindestens 70 % aufweisen. Die Dichte des carbonisierten oder verkokten Holzes liegt im Bereich von 0,1 bis 0,9 g/cm³, bevorzugt bei ca. 0,5 bis 0,6 g/cm³. Der für die Durchflußleistung der Dochte wichtigste Parameter ist ihre Porosität, insbesondere in den parallel verlaufenden und offenen Mesoporen, gemessen als Volumenanteil der Poren an dem gesamten Volumen des betreffenden Stoffes. Als offene Poren werden solche bezeichnet, die von der Oberfläche des Körpers aus zugänglich sind.

Erfindungsgemäß liegt die nach der Carbonisierung oder Verkokung erreichte offene Porosität bei mindestens 15 % und höchstens 60 %, bevorzugt bei mindestens 20 % und besonders bevorzugt im Bereich von 21 bis 44 %. Der bevorzugte Bereich der gesamten Porosität liegt bei 40 bis 90 %, besonders bevorzugt bei 65 bis 85 %.

Durchmesser und Größenverteilung der Poren hängen von der Art des Holzes ab, wobei typischerweise zwei scharf voneinander getrennte Durchmesserbereiche gebildet werden; Mikroporen im Bereich von ca. 1 µm bis ca. 50 µm und die Mesoporen im Bereich von ca. 50 bis 600 µm. Der erfindungsgemäß bevorzugte mittlere Durchmesser der Mesoporen für getrocknetes oder carbonisiertes Holz liegt im Bereich von 100 bis 600 µm und besonders bevorzugt im Bereich von 200 bis 400 µm. Das Holz wird bevorzugt so verarbeitet, daß die Mesoporen parallel zur Längsrichtung der Dochte verlaufen. Diese Dochte werden typischerweise so ausgerichtet, daß die parallelen Porenkanäle in spitzem Winkel auf die Oberfläche des Grünkörpers stoßen, bevorzugt in einem Winkel von 0° bis maximal 45° zu Normalen auf der Oberfläche. Durch eine Anordnung parallel zur Normalen wird die maximale Durchflußleistung erreicht. Unter den Naturhölzern sind Nadelhölzer und Laubhölzer einsetzbar, wobei Balsa, Kiefer, Eiche, Ahorn, Buche, Ebenholz und Bambus besonders geeignet sind. Ebenso ist es aber auch möglich, gängige Holzwerkstoffe wie Spanplatten, Preßholz, Kunstholz oder Holzformmassen einzusetzen. Zwar können in diesen Werkstoffen aufgrund der Verwendung von Holzmehl, Holzspänen oder Holzstücken keine den Docht vollständig durchziehenden Porenkanäle mehr gebildet werden. Ebenso besitzen die Porenkanäle im allgemeinen keine deutliche Vorzugsrichtung mehr. Aber die für den Schmelzetransport bevorzugten Mesoporen bleiben auch hier vollständig erhalten. Die gegebenenfalls auftretende Verminderung der Durchflußleistung aufgrund des Fehlens der vollständig parallel gerichteten Porenkanäle kann durch eine geringfügige Erhöhung des Dochtquerschnitts leicht ausgeglichen werden.

Bei der Schmelzinfiltration in den Grünkörper ist besonders eine besonders geringe Kontaktfläche zum Grünkörper erstrebenswert, denn dies ist die Fläche, welche zu Verklebung zwischen Docht und Verbundwerkstoffkörper neigt. Aufgrund der guten Festigkeitswerte und der hohen Durchflußleistung der erfindungsgemäßen Dochtmaterialien ist es möglich, vergleichsweise dünne Dochte zu verwenden. Bevorzugt sind die Dochte an ihrer Basis breiter als an der Kontaktfläche zum aufliegenden Grünkörper. Typische geometrische Ausführungsformen sind Kegelstümpfe, Kegel, Pyramidenstümpfe oder Pyramiden. Es ist weiter bevorzugt, mehrere Dochte untereinander durch poröses Kohlenstoffmaterial zu verbinden. Insbesondere durch die geringen Kosten der Holzwerkstoffe ist es nun auch möglich, aufwendigere Dochtkonstruktionen zu verwirklichen, beispielsweise zusammenhängende Dochte, Docht/Grundplatte-Konstruktionen, bei welchen die Dochte mit einer Grundplatte aus carbonisiertem Holz verbunden sind, oder Docht/Tiegel-Konstruktionen, bei denen die Dochte in Tiegel aus carbonisiertem Holz integriert sind.

Erfindungsgemäß enthalten die auf Holz basierenden Dochtmaterialien freien Kohlenstoff. Für die Funktionsweise der Dochte ist vermutlich die Möglichkeit zur chemischen Reaktion zwischen dem Kohlenstoff des Dochtmaterials und Komponenten der Schmelze zu Metallcarbiden von entscheidender Bedeutung. Hierdurch wird die Kapillarwirkung zum Schmelzetransport offenbar wesentlich unterstützt. Die erfindungsgemäßen Dochte und das Infiltrationsverfahren sind daher insbesondere nicht auf nach dem LSI-Verfahren hergestellte mit Kohlenstoffasern verstärkte SiC-haltige Verbundwerkstoffe durch Infiltration von porösen Kohlenstoffkörpern mit Siliciumschmelzen beschränkt. Vielmehr sind die Dochtmaterialien auch für die Infiltration mit Schmelzen anderer carbidbildender Metalle geeignet. Auf diese Weise ist es auch möglich, andere metallcarbidhaltige Verbundwerkstoffe nach dem Schmelzinfiltrationsverfahren zu erzeugen. Als carbidbildende Metalle können beispielsweise Eisen, Nickel, Titan, Zirkon, Vanadium, Chrom, Molybdän, Wolfram oder Bor und deren Legierungen verwendet werden. Besonders bevorzugt werden Legierungen dieser Metalle mit Silicium eingesetzt.

Durch das vorgestellte Verfahren sind somit auch solche kohlenstoffaserverstärkten Metallcarbidkeramiken, deren Matrix unter anderem SiC, ZrC, TiC, TiSiₓ und /oder MoSiₓ enthält, in kostengünstiger Weise herstellbar.

Besonders bevorzugt werden die erfindungsgemäßen Dochtmaterialien bei der Herstellung von Platten- oder scheibenförmigen C/SiC-Bauteilen, so wie Brems- oder Kupplungsscheiben eingesetzt. Besonders bei Massenprodukten wie Brems- oder Kupplungsscheiben ist gerade der Kostenvorteil der Dochte aus Holzwerkstoffen erheblich.

## Patentansprüche

1. Verfahren zur Herstellung von metallcarbidhaltigen keramischen Verbundwerkstoffen umfassend die folgenden Schritte
- Herstellung eines porösen kohlenstoffhaltigen Grünkörpers
- Infiltration des Grünkörpers mit der Schmelze eines carbidbildenden Metalls
- Reaktion zumindest eines Teiles des Kohlenstoffs des Grünkörpers mit dem carbidbildenden Metall zu einem Metallcarbid,
**dadurch gekennzeichnet, daß** das carbidbildende Metall zumindest zum Teil über mindestens einen Docht aus porösem Kohlenstoffmaterial mit Porenkanälen zugeführt wird, wobei der Docht durch Verkoken oder Carbonisieren von Holz hergestellt wird, und die offene Porosität der Dochte mindestens 15 % und höchstens 60 % beträgt.

2. Verfahren nach Anspruch 1, **dadurch gekennzeichnet, daß** der Grünkörper direkt auf die Dochte aufgelegt wird, wobei die Dochte mit ihrem unteren Ende in eine Metallschmelze eintauchen.

3. Verfahren nach Anspruch 1, **dadurch gekennzeichnet, daß** als poröser kohlenstoffhaltiger Grünkörper ein C/C-Verbundmaterial eingesetzt wird.

4. Verfahren nach Anspruch 1, **dadurch gekennzeichnet, daß** als carbidbildendes Metall Silicium, Eisen, Nickel, Titan, Zirkon, Vanadium, Chrom, Molybdän, Wolfram oder Bor oder Legierungen von mindestens zwei dieser Elemente verwendet werden.

5. Verfahren nach Anspruch 3, **dadurch gekennzeichnet, daß** in der Matrix der metallcarbidhaltigen keramischen Verbundwerkstoffe durch Infiltration und nachfolgende Reaktion mindestens eine der Verbindungen SiC, ZrC, TiC, TiSiₓ und MoSiₓ gebildet wird.

6. Verfahren nach Anspruch 1, **dadurch gekennzeichnet, daß** der Docht aus einem Holzwerkstoff ausgewählt aus Naturholz, Pressholz, Holzformmassen oder Kunstholz durch Carbonisieren gebildet wird.

7. Verfahren nach Anspruch 6, **dadurch gekennzeichnet, daß** als Naturholz Balsa, Kiefer, Eiche, Ahorn, Buche, Ebenholz oder Bambus verwendet wird.

8. Verfahren nach Anspruch 1, **dadurch gekennzeichnet, daß** ein Dochtmaterial mit einer offenen Porosität im Bereich von 20 % bis 60 % eingesetzt wird.

9. Verfahren nach Anspruch 1, **dadurch gekennzeichnet, daß** der überwiegende Teil der Porenkanäle der Dochte in einem Winkel im Bereich von 45° bis 0° zu der Normalen der Oberfläche des Grünkörpers auf diesen auftrifft.

10. Dochte aus Kohlenstoffmaterial mit Porenkanälen, **dadurch gekennzeichnet, daß** die Dochte durch Verkoken oder Carbonisieren von Holz hergestellt werden, daß die Porenkanäle der Dochte Durchmesser im Bereich von 50 µm bis 600 µm aufweisen, und die offene Porosität der Dochte mindestens 15 % und höchstens 60 % beträgt.

11. Dochte nach Anspruch 10, **dadurch gekennzeichnet, daß** ihre offene Porosität mindestens 16 % beträgt.

12. Dochte nach Anspruch 10, **dadurch gekennzeichnet, daß** sie an ihrer Basis breiter sind als an der Kontaktfläche zum aufliegenden Grünkörper.

13. Dochte nach Anspruch 10, **dadurch gekennzeichnet, daß** sie die Form von sich Kegelstümpfen, Kegeln, Pyramidenstümpfen oder Pyramiden aufweisen.

14. Anordnung aus mehreren Dochten nach Anspruch 10, **dadurch gekennzeichnet, daß** diese untereinander durch poröses Kohlenstoffmaterial verbunden sind.

15. Verwendung von Dochten oder einer Anordnung von Dochten nach mindestens einem der Ansprüche 10 bis 14 zur Infiltration von porösen Kohlenstoffkörpern mit Siliciumschmelzen.

16. Verwendung von Dochten oder einer Anordnung von Dochten nach mindestens einem der Ansprüche 10 bis 14 zur Herstellung von C/SiC-Verbundwerkstoffen.

17. Verwendung von Dochten oder einer Anordnung von Dochten nach mindestens einem der Ansprüche 10 bis 14 zur Herstellung von keramischen Bremsscheiben oder Kupplungsscheiben.

## Claims

1. A process for producing ceramic composites comprising metal carbides, which comprises the following steps
- production of a porous carbon-containing green body,
- infiltration of the green body with the melt of a carbide-forming metal,
- reaction of at least part of the carbon of the green body with the carbide-forming metal to form a metal carbide,
wherein at least part of the carbide-forming metal is supplied via at least one wick made of porous carbon material having pore channels, with the wick being produced by carbonization of wood, and the open porosity of the wick being at least 15 % and at most 60 %.

2. The process as claimed in claim 1, wherein the green body is placed directly on the wicks whose lower ends dip into a metal melt.

3. The process as claimed in claim 1, wherein the porous carbon-containing green body used is a C/C composite.

4. The process as claimed in claim 1, wherein the carbide-forming metal used is silicon, iron, nickel, titanium, zirconium, vanadium, chromium, molybdenum, tungsten or boron or an alloy of at least two of these elements.

5. The process as claimed in claim 3, wherein at least one of the compounds SiC, ZrC, TiC, TiSiₓ and MoSiₓ is formed in the matrix of the metal carbide-containing ceramic composites by infiltration and subsequent reaction.

6. The process as claimed in claim 1, wherein the wick is produced from a wood material selected from among natural wood, pressed wood, wood molding compositions or synthetic wood by carbonization.

7. The process as claimed in claim 6, wherein balsa, pine, oak, maple, beech, ebony or bamboo is used as natural wood.

8. The process as claimed in claim 1, wherein a wick material having an open porosity in the range from 20 % to 60 % is used.

9. The process as claimed in claim 1, wherein the predominant proportion of the pore channels of the wicks impinge on the green body at an angle in the range from 45 ° to 0 ° to the normal to the surface of the green body.

10. A wick comprising carbon material having pore channels, wherein the wick is produced by carbonization of wood, the pore channels of the wick have diameters in the range from 50 µm to 600 µm, and the open porosity of the wick is at least 15 % and at most 60 %.

11. A wick as claimed in claim 10 which has an open porosity of at least 16 %.

12. A wick as claimed in claim 10 which is broader at its base than at the contact area to the green body resting thereon.

13. A wick as claimed in claim 10 which has the shape of a truncated cone, a cone, a truncated pyramid or a pyramid.

14. An assembly of a plurality of wicks as claimed in claim 10 which are joined to one another by means of porous carbon material.

15. The use of a wick or an assembly of wicks as claimed in at least one of claims 10 to 14 for the infiltration of porous carbon bodies with silicon melts.

16. The use of a wick or an assembly of wicks as claimed in at least one of claims 10 to 14 for the production of C/SiC composites.

17. The use of a wick or an assembly of wicks as claimed in at least one of claims 10 to 14 for the production of ceramic brake discs or clutch discs.

## Revendications

1. Procédé pour la production de matériaux composites céramiques contenant un carbure métallique, comprenant les étapes suivantes
- préparation d'un corps cru poreux contenant du carbone
- infiltration du corps cru avec la masse fondue d'un métal formant un carbure
- réaction d'au moins une partie du carbone du corps cru avec le métal formant un carbure, conduisant à un carbure métallique,
**caractérisé en ce que** le métal formant un carbure est amené au moins en partie par au moins une mèche en matériau carboné poreux à canaux de pores, la mèche étant produite par cokéfaction ou carbonisation de bois, et la porosité ouverte des mèches étant d'au moins 15 % et d'au maximum 60 %.

2. Procédé selon la revendication 1, **caractérisé en ce que** le corps cru est placé directement sur les mèches, les mèches plongeant par leur extrémité inférieure dans un métal en fusion.

3. Procédé selon la revendication 1, **caractérisé en ce qu'**on utilise comme corps cru contenant du carbone un matériau composite C/C.

4. Procédé selon la revendication 1, **caractérisé en ce qu'**on utilise comme métal formant un carbure le silicium, le fer, le nickel, le titane, le zirconium, le vanadium, le chrome, le molybdène, le tungstène ou le bore ou des alliages d'au moins deux de ces éléments.

5. Procédé selon la revendication 3, **caractérisé en ce que** dans la matrice des matériaux composites céramiques contenant un carbure métallique au moins l'un des composés SiC, ZrC, TiC, TiSiₓ et MoSiₓ est formé par infiltration et réaction subséquente.

6. Procédé selon la revendication 1, **caractérisé en ce que** la mèche est formée par carbonisation à partir d'un matériau dérivé du bois choisi parmi le bois naturel, le bois lamellé comprimé, des matières moulés à base de bois ou le bois aggloméré.

7. Procédé selon la revendication 6, **caractérisé en ce qu'**on utilise en tant que bois naturel le balsa, le pin, le chêne, l'érable, le hêtre, l'ébène ou le bambou.

8. Procédé selon la revendication 1, **caractérisé en ce qu'**on utilise un matériau de mèche ayant une porosité ouverte dans la plage de 20 % à 60 %.

9. Procédé selon la revendication 1, **caractérisé en ce que** la majeure partie des canaux de pores des mèches arrivent sur le corps cru en faisant un angle dans la plage de 45° à 0° avec la normale de la surface du corps cru.

10. Mèches en un matériau carboné à canaux de pores, **caractérisées en ce que** les mèches sont produites par cokéfaction ou carbonisation de bois, **en ce que** les canaux de pores des mèches ont des diamètres dans la plage allant de 50 µm à 600 µm, et la porosité ouverte des mèches est d'au moins 15 % et d'au maximum 60 %.

11. Mèches selon la revendication 10, **caractérisées en ce que** leur porosité ouverte est d'au moins 16 %.

12. Mèches selon la revendication 10, **caractérisées en ce qu'**elles sont plus larges à leur base qu'à la face de contact avec le corps cru posé.

13. Mèches selon 1a revendication 10, **caractérisées en ce qu'**elles ont en soi la forme de troncs de cônes, de cônes, de pyramides tronquées ou de pyramides.

14. Groupement de plusieurs mèches selon la revendication 10, **caractérisé en ce que** celles-ci sont assemblées par un matériau carboné poreux.

15. Utilisation de mèches ou d'un groupement de mèches selon au moins l'une des revendications 10 à 14, pour l'infiltration de corps carbonés poreux avec des masses fondues de silicium.

16. Utilisation de mèches ou d'un groupement de mèches selon au moins l'une des revendications 10 à 14, pour la production de matériaux composites C/SiC.

17. Utilisation de mèches ou d'un groupement de mèches selon au moins l'une des revendications 10 à 14, pour la fabrication de disques d'embrayage ou disques de frein céramiques.
